# FASCICULE DE BREVET EUROPEEN

(11) **EP 1 415 856 B1**
(45) Date de publication et mention de la délivrance du brevet: **15.02.2006**
(21) Numéro de dépôt: 03292623.0
(22) Date de dépôt: 21.10.2003
(51) Int. Cl.: B60Q 1/08, B60Q 1/12

(54) **Procédé de commande des faisceaux lumineux émis par un dispositif d'éclairage d'un véhicule et système de mise en oeuvre de ce procédé**
Verfahren zur Ansteuerung eines Fahrzeugscheinwerfers und System zur Durchführung des Verfahrens
Method for controlling a vehicle headlamp and system for carrying out such a method

(30) Priorité: 30.10.2002 FR 0213898
(43) Date de publication de la demande: 06.05.2004
(73) Titulaire: VALEO VISION, 93012 Bobigny Cédex (FR)
(72) Inventeur: Dubrovin, Alexis, 94270 Le Kremlin Bicetre (FR); Dari, Alain, 94120 Fontenay sous Bois (FR); Ba, Sidy, 92310 Sevres (FR); Lacombe, Patrick, 92210 Saint Cloud (FR)
(74) Mandataire: Renous Chan, Véronique

(56) Documents cités:
- FR-A- 2 812 844
- US-A1- 2002 080 617
- US-A1- 2002 080 618

## Description

### Domaine de l'invention

L'invention concerne un procédé de commande des faisceaux lumineux projetés par un dispositif d'éclairage d'un véhicule, sur une route, en fonction de la géométrie de cette route. L'invention concerne également un système mettant en oeuvre ce procédé.

L'invention trouve des applications dans le domaine des véhicules circulant sur routes comme, par exemple, les véhicules automobiles ou les véhicules poids lourds. Elle trouve, en particulier, des applications dans le domaine de la projection de lumière par ces véhicules.

### Etat de la technique

Compte tenu du nombre important de véhicules circulant sur les routes, il est nécessaire de procurer à ces véhicules un éclairage le mieux adapté possible, d'une part, à la route sur laquelle ils circulent et, d'autre part, à leurs conditions de circulation. En particulier, la nuit ou par mauvais temps (brouillard, pluie, etc.), il est important que le conducteur puisse avoir une vision optimale de la route qui s'étend devant lui et des bas côtés de cette route. Autrement dit, pour des questions de sécurité, on cherche à améliorer l'éclairage de la scène située devant le véhicule et ainsi à améliorer la vision de cette scène par le conducteur d'un véhicule.

Classiquement, il existe sur les véhicules automobiles, deux types d'éclairage: un éclairage dit « de route » qui éclaire la route intégralement sur une longue distance et un éclairage de croisement qui éclaire la route sur une courte distance pour éviter d'éblouir les conducteurs des véhicules venant en sens opposé. L'éclairage de route est réalisé au moyen de projecteurs de route qui envoient chacun un faisceau lumineux dirigé vers l'horizon. L'éclairage de croisement est réalisé au moyen de projecteurs de croisement, ou codes, qui envoient chacun une nappe de lumière descendante donnant une visibilité sur une distance de l'ordre de 60 à 80 mètres.

Pour améliorer cet éclairage, on cherche à orienter la lumière émise par les projecteurs en fonction de la géométrie de la route. Autrement dit, on cherche à ce que les projecteurs « suivent » la route, c'est-à-dire qu'ils éclairent droit devant le véhicule, lorsque la route est rectiligne et qu'ils éclairent à l'avant du véhicule, sur la droite ou sur la gauche, lorsque la route forme un virage, respectivement, à droite ou à gauche.

Des dispositifs d'éclairage destinés à suivre la route sont déjà connus, on désigne usuellement cette nouvelle fonctionnalité par le terme anglo-saxon de « Bending Light ». Généralement, ces dispositifs utilisent des informations disponibles sur le véhicule pour déterminer la géométrie de la route. Certains de ces dispositifs intègrent un capteur d'angle au volant qui fournit des informations sur la trajectoire suivie par le véhicule. Dans ce cas, l'éclairage de la route est fonction du comportement du conducteur. Par exemple, si le conducteur tourne le volant du véhicule vers la droite, alors les projecteurs du véhicule sont dirigés vers la droite de la route, en considérant qu'il s'agit d'un virage à droite. Au contraire, si le conducteur ne bouge pas son volant, les projecteurs éclairent droit devant le véhicule, comme cela est normalement le cas en ligne droite ou juste avant la courbure d'un virage. Un tel dispositif n'a pas connaissance de la forme de la route à l'avant, et il présente donc des retards sur le déclenchement de l'éclairage en virage. Cela se traduit, pour le conducteur, par une sensation d'arrivée tardive du faisceau lumineux en entrée du virage et par un retour trop lent du faisceau lumineux dans l'axe du véhicule en sortie du virage. Ce retard dans le changement d'orientation des projecteurs entraîne, non seulement un manque de confort pour le conducteur, mais aussi un manque de sécurité puisqu'il existe, à chaque changement de courbure de la route, un instant pendant lequel la route est incorrectement éclairée. En outre, avec ce dispositif, l'orientation des projecteurs dépend uniquement du comportement du conducteur. Aussi, si celui-ci donne malencontreusement une impulsion au volant du véhicule, par exemple en se retournant un instant ou en sortant un objet de la boite à gant, l'orientation des projecteurs est brutalement modifiée alors que la géométrie de la route reste inchangée.

Un autre dispositif d'éclairage connu utilise une information interne au véhicule permettant une certaine anticipation. Par exemple, juste avant la sortie d'un virage, bien que le volant soit toujours à l'angle correspondant à la courbe, il est courant que le conducteur accélère car il est en vue de la sortie du virage et d'une partie de route plus rectiligne que celle qu'il vient de passer. Un tel dispositif utilise cette concordance d'événements pour commencer à rabattre les faisceaux lumineux vers leur position centrale. Par contre, l'information inverse ne peut pas être utilisée. En effet, lorsque le conducteur arrive en vue d'un virage, généralement il freine. Cependant, il n'est pas possible de savoir, à partir simplement du freinage, si le conducteur freine à cause d'un virage à droite ou d'un virage à gauche ou bien parce qu'il y a un obstacle devant lui qui l'oblige à freiner. Ce type de dispositif permet donc d'anticiper quelque peu l'éclairage de la route, mais dans certains cas seulement.

Certains autres dispositifs d'éclairage connus utilisent des informations issues d'un système de navigation. Ce système de navigation associe les informations fournies par une cartographie avec les indications données par le GPS du véhicule. Un tel système de navigation permet de connaître à l'avance la géométrie de la route. Par exemple, il est possible de connaître à l'avance les virages qui vont apparaître sur la route, à une distance donnée. Il est donc possible, en se fiant aux informations fournies par le système de navigation, de pré orienter les faisceaux lumineux du véhicule et ainsi d'anticiper l'éclairage de la route. De tels dispositifs sont décrits notamment dans les documents EP 780 823 et EP 887 229.

Cependant, les systèmes de navigation actuels sont encore très imprécis. II arrive souvent, qu'à un endroit donné, l'information soit absente ou obsolète (travaux, nouvelle voie...). II existe même des zones entières du pays et du monde qui ne sont pas couvertes par les bases de données utilisées par la cartographie. II arrive aussi que les informations fournies par le système de navigation soient aberrantes. Cela peut notamment être le cas quand il y a perturbation d'un des sous-systèmes de la navigation, comme celui du signal GPS entre des tours, ou dans de courts tunnels. Cela peut aussi être le cas du fait du conducteur, lequel peut par exemple prévoir de se rendre en un lieu A qu'il a mémorisé dans son système de navigation et finalement en cours de route, se décider pour aller vers un lieu B et de ne pas suivre les directions indiquées par le système de navigation. Tous ces aléas peuvent entraîner non seulement des prestations médiocres, mais aussi des prestations dangereuses par leur manque de fiabilité.

Il est également connu par les documents US-2002/0080618 et FR-2812844 des dispositifs d'éclairage qui utilisent afin d'élaborer la commande d'éclairage destinée aux projecteurs à la fois des informations issues d'un système de navigation et des informations produites par des capteurs embarqués dans le véhicule.

Le document US-2002/0080618 décrit un dispositif d'éclairage selon le préambule de la revendication 1, dans lequel la fiabilité des informations disponibles est prise en compte pour élaborer la commande d'éclairage. Ainsi, la commande d'éclairage peut être élaborée à partir des informations du système de navigation et/ou des informations produites par des capteurs embarqués, selon la fiabilité évaluée de ces informations.

Le document FR-2812844 décrit un dispositif d'éclairage dans lequel la commande d'éclairage opère soit dans un premier mode de fonctionnement correspondant à la configuration de la route, soit dans un second mode de fonctionnement correspondant à l'angle de virage. Le premier mode ou le second mode de fonctionnement est sélectionné en fonction de la vitesse du véhicule.

### Exposé de l'invention

L'invention a justement pour but de remédier aux inconvénients des techniques exposées précédemment. A cette fin, l'invention propose un procédé de commande des projecteurs d'un véhicule utilisant à la fois les informations fournies par le système de navigation et des informations fournies par un ou plusieurs capteurs, notamment de grandeurs dynamiques du véhicule, tel que le capteur d'angle au volant ou le capteur de vitesse. Pour cela, l'invention propose d'effectuer une série de tests de cohérence avant de déterminer quelle stratégie de commande sera retenue. Le premier test de cohérence concerne celui du système de navigation, et consiste à relever son taux de confiance. Ce taux est une valeur calculée à partir de la mise en cohérence par la navigation des informations de cartographie, de GPS, et de divers capteurs embarqués. II indique de manière normalisée le degré de certitude des informations issues du système. Si ce taux de confiance est satisfaisant, c'est à dire supérieur à un seuil préalablement déterminé, alors les informations de navigation peuvent être prises en compte dans la suite de la stratégie de commande des projecteurs. Si ce taux est insuffisant, alors on choisit de prendre en compte essentiellement les informations du ou des capteurs, notamment de type dynamiques.

De façon plus précise, l'invention concerne un procédé de commande de faisceaux lumineux émis par un dispositif d'éclairage d'un véhicule circulant sur une route, en fonction de la géométrie de cette route, comportant les étapes :
- Capture, par au moins un capteur du véhicule, d'au moins une information relative au comportement dynamique du véhicule et détermination d'une première commande d'éclairage sur la base uniquement de ladite au moins une information relative au comportement dynamique du véhicule,
- Obtention d'un ensemble d'informations de navigation comprenant la forme de la route et un taux de confiance pour lesdites informations de navigation, comparaison du taux de confiance à un seuil de confiance préalablement déterminé, et si le taux de confiance est supérieur au seuil de confiance, détermination d'une seconde commande d'éclairage prenant en compte au moins une partie de l'ensemble des informations de navigation, et

Si le taux de confiance est inférieur au seuil de confiance,
- Appliquer au dispositif d'éclairage ladite première commande d'éclairage,
   et caractérisé en ce qu'il comprend également les étapes :
   Si le taux de confiance est supérieur au seuil de confiance,
      - Comparer lesdites première et seconde commandes d'éclairage,
      - Appliquer au dispositif d'éclairage ladite seconde commande d'éclairage lorsqu'un écart entre lesdites première et seconde commandes d'éclairage est inférieur à un seuil prédéterminé, et
      - Appliquer au dispositif d'éclairage ladite première commande d'éclairage lorsqu'un écart entre lesdites première et seconde commandes d'éclairage est supérieur à un seuil prédéterminé.

      Cette comparaison s'effectue de préférence en prenant en compte plusieurs cycles d'étapes/calculs précédents, par itérations. Elle détermine si des incohérences fortes apparaissent (comportements antagonistes, oscillants, brutaux...). De cette comparaison découle la détermination de la commande effective à appliquer.
   - Si le taux de confiance est inférieur au seuil de confiance, la commande est appliquée, déterminant notamment une nouvelle consigne de position angulaire des phares. Dans cette éventualité, (quand des incohérences sont donc relevées), cette commande d'éclairage est basée alors (uniquement) sur les données fournies par les capteurs dynamiques, réputés fiables.

L'invention concerne également un système permettant de mettre en oeuvre le procédé précédent. Il s'agit d'un système de commande des faisceaux lumineux émis par un dispositif d'éclairage d'un véhicule circulant sur une route, en fonction de la géométrie de cette route, qui comporte au moins un capteur lié au véhicule et donnant une information relative au comportement du véhicule. Ce système se caractérise par le fait qu'il comporte :
- un système de navigation embarqué,
- un dispositif de traitement des informations fournies par le capteur et par le système de navigation, ledit système de traitement comprenant des moyens adaptés à une mise oeuvre du procédé selon l'invention brièvement décrit ci-dessus, et
- un dispositif de commande de l'éclairage.

### Brève description des figures

La figure 1 représente schématiquement la trajectoire d'un véhicule sur une route, pour lequel on cherche à diriger les faisceaux lumineux de façon optimale.
La figure 2 représente le diagramme fonctionnel des différentes étapes du procédé de l'invention.
La figure 3 représente un projecteur de véhicule avec le système de commande d'éclairage de l'invention.

### Description détaillée de modes de réalisation de l'invention

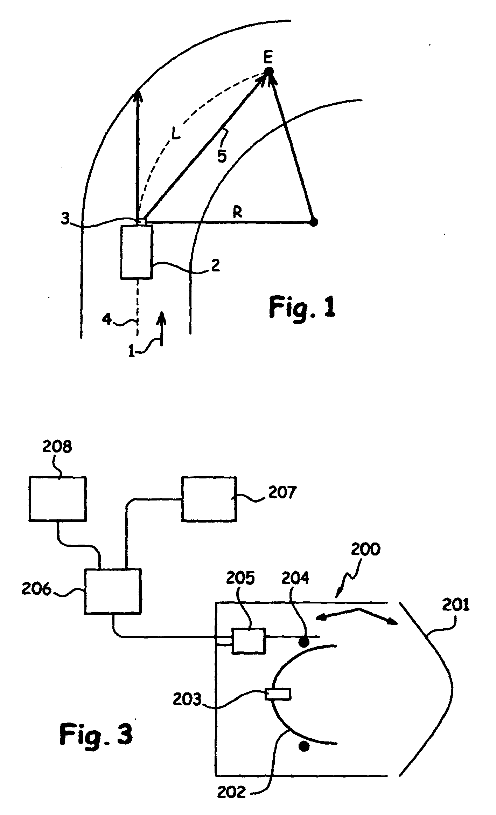

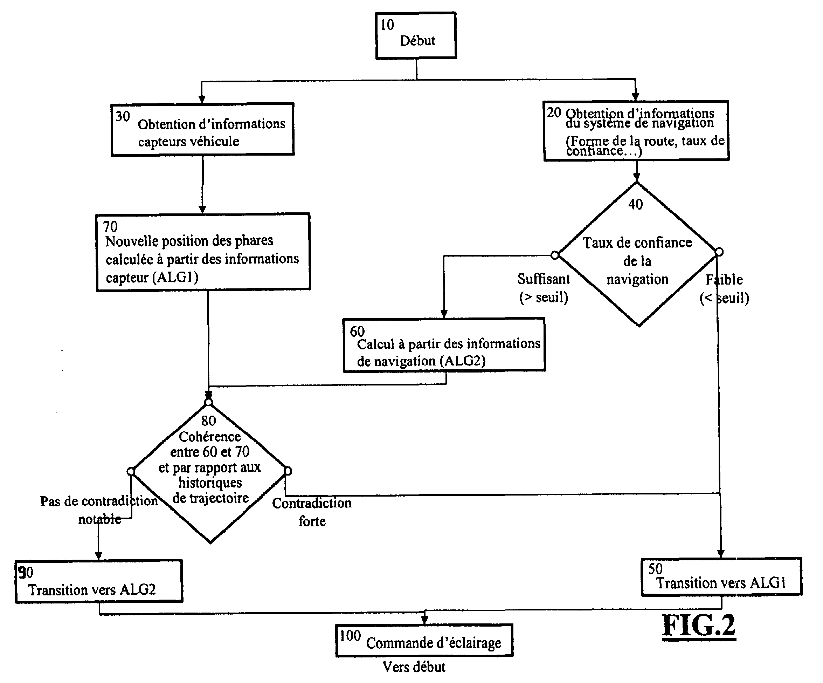

La figure 1 représente une route 1 sur laquelle circule un véhicule 2 muni de projecteurs 3, appelés aussi dispositif d'éclairage. Cette route 1 comporte un virage vers la droite ayant un rayon de courbure R. La figure 1 montre, en pointillés, la trajectoire 4 que va suivre le véhicule 2 et donc la direction, selon cette trajectoire, que l'on veut faire suivre aux faisceaux lumineux des projecteurs du véhicule.

Pour déterminer la position des faisceaux lumineux des projecteurs du véhicule sur la route, une distance L, appelée distance pertinente, peut être calculée. Cette distance pertinente L est la distance curviligne entre le point d'émission des faisceaux lumineux, c'est-à-dire approximativement l'endroit où se trouvent les projecteurs, et le point d'éclairage E visé sur la trajectoire du véhicule, le point d'éclairage E correspondant à l'intersection entre la direction d'éclairage souhaitée et le milieu de la voie, représenté en pointillés.

La distance pertinente L peut être fonction de différents paramètres liés au comportement du véhicule, tel que la vitesse du véhicule ou à la géométrie de la route, tel que le profil de la route.

Le système de navigation, qui peut foumir des informations prédictives de description de la route empruntée ainsi que des éventuels croisements, permet d'affiner le calcul de la distance pertinente L. Par exemple, lorsque le véhicule se rapproche d'un virage très serré, dit « en épingle à cheveux » ou s'il se trouve sur route de montage avec des lacets, c'est-à-dire des virages qui se succèdent à droite puis à gauche, etc., il est judicieux de pouvoir utiliser les informations fournies par le système de navigation pour déterminer les angles d'orientation des projecteurs.

Cependant, comme expliqué précédemment, les indications fournies par le système de navigation peuvent être inexistantes ou aberrantes. Pour cela, le procédé de l'invention propose de vérifier la cohérence de ces informations fournies par le système de navigation en se basant sur les informations fournies par les capteurs embarqués dans le véhicule, comme le capteur d'angle au volant, le capteur de vitesse, le capteur d'accélération, etc.

Plus précisément, dans le procédé de l'invention on propose une étape dans laquelle on vérifie, en permanence, s'il y a une cohérence entre la description de la route reçue par le système de navigation et la trajectoire effectivement suivie par le véhicule, notamment la trajectoire déjà parcourue par le véhicule. Cette trajectoire parcourue est déterminée à partir des informations fournies par des capteurs embarqués. Le but de cette vérification de cohérence est de palier les anomalies de fonctionnement telles que le parcours sur une voie inexistante, le non respect des éventuelles instructions de guidage du système de navigation par la modification de la destination sans mise à jour de la navigation. En cas de détection d'anomalies, on assure, dans le procédé selon l'invention, un retour progressif vers une loi de commande basée sur les capteurs véhicules.

Autrement dit, le procédé de l'invention peut comporter une étape consistant à confronter les informations issues du système de navigation avec les informations provenant des capteurs embarqués et à vérifier s'il y a une cohérence entre ces deux types d'informations et/ou éventuellement des aberrations entre ces deux types d'informations. Lorsqu'il y a cohérence, alors les informations provenant du système de navigation sont prises en compte pour commander l'angle de rotation des projecteurs du véhicule, c'est-à-dire l'angle dont les faisceaux lumineux doivent être déviés, par rapport à leur position actuelle. Dans le cas contraire, s'il n'y a pas cohérence, c'est-à-dire s'il y a une aberration entre les deux types d'informations, alors la priorité est donnée aux informations provenant des capteurs embarqués. Les informations provenant du système de navigation ne sont alors pas prises en compte. Seules les informations provenant des capteurs embarqués sont prises en compte pour commander la rotation des projecteurs. On dit que le procédé de l'invention prend la forme d'une prépondérance de la « loi au volant » par rapport à la « loi de navigation ». Le procédé de l'invention gère alors les transitions de basculement entre l'une ou l'autre des lois afin de ne pas provoquer de perturbations ou de gênes pour le conducteur.

En d'autres termes, le procédé de l'invention prévoit notamment, de vérifier si le taux de confiance de la loi de navigation est correct, c'est-à-dire supérieur à un seuil prédéfini, de confronter les informations de navigation à un ensemble de données dites historiques basé sur les capteurs véhicule afin d'éliminer tout risque d'agir de manière aberrante sur l'éclairage. Les données historiques sont essentiellement celles relatives aux dernières positions adoptées par les dispositifs d'éclairage. Les informations fournies par la navigation (dont par exemple le taux de confiance, le tracé de la route, les descriptions des ouvrages, des croisements) sont des informations obtenues par fusion des données fournies par la cartographie et des données fournies par le GPS du véhicule, ainsi qu'éventuellement des données fournies par différents capteurs incorporés ou non à l'entité navigation. Le taux de confiance permet de connaître le niveau de confiance des informations fournies par le système de navigation. Par exemple, si le GPS à un endroit donné est inexistant, alors le taux de confiance sera très mauvais. On notera que, par contre, les informations fournies par la plupart des capteurs dynamiques sont des informations fiables puisqu'elles sont basées sur des évènements réels. Le taux de confiance est comparé à un seuil en dessous duquel il est estimé que les informations de navigation ne peuvent être utilisées. Ainsi, en fonction du taux de confiance qui a été déterminé, le procédé de l'invention décide de prendre en compte tes informations fournies par le système de navigation ou de ne pas les prendre en compte. Il est également possible de mixer les informations provenant du système de navigation avec les informations provenant des capteurs embarqués. Ceci peut être le cas, par exemple, lorsque le taux de confiance sur la localisation du véhicule est en train de diminuer mais n'est pas inférieure au seuil prédéfini. Ce mixage entre la loi de navigation et la loi au volant s'effectue « en douceur » c'est-à-dire sans comportement brusque, intempestif ou trop répétitif.

Lorsque la navigation n'est pas en mode guidage, il est impossible de déterminer avec certitude quelle voie le conducteur va prendre lorsqu'il approche d'un carrefour. L'observation du clignotant, d'un changement de voie, de l'angle au volant... sont quelques indices qui peuvent permettre de parier sur la prise ultérieure d'une des voies. L'invention permettra un retour rapide aux capteurs dynamique si la prévision s'avère erronée.

Sur la figure 2, on a représenté le diagramme fonctionnel des différentes étapes du procédé de l'invention. Ce procédé a pour but de commander les faisceaux lumineux émis par tes projecteurs du véhicule, de façon anticipative. Ce procédé peut être mis en oeuvre dès que le conducteur décide d'allumer ses projecteurs. Il peut aussi être mis en oeuvre en permanence, dès que le conducteur met le contact, c'est-à-dire dès que le moteur du véhicule est en fonctionnement. Le début de la mise en oeuvre du procédé de l'invention est symbolisé, sur la figure 2, par la référence 10.

Le procédé de l'invention consiste tout d'abord à recueillir des informations provenant du système de navigation (étape 20) et, parallèlement, les informations issues d'un capteur embarqué (ou de plusieurs capteurs, selon la variante considérée), comme le capteur d'angle au volant (étape 30).

Le procédé consiste ensuite à évaluer le taux de confiance des informations de navigation (étape 40). Ce taux de confiance est une information fournie par le système de navigation lui-même. Si ce taux de confiance est faible, c'est-à-dire inférieur à un seuil prédéfini, alors les informations de navigation ne sont pas prises en compte. L'angle de rotation des projecteurs est alors déterminé, à l'étape 50.

Dans cette étape 50, on fait notamment intervenir un algorithme ALG1 utilisant uniquement les informations provenant des capteurs. On obtient alors un angle de rotation théorique à appliquer aux projecteurs, cet angle de rotation théorique ne prenant en compte que les informations capteurs du véhicule. Afin de ne pas provoquer de rotation trop brutale, on prévoit, toujours dans l'étape 50, de comparer l'angle de rotation théorique avec un ensemble de données, dit historique, qui comporte notamment des informations relatives aux précédentes positions du dispositif d'éclairage. Si la position précédente est très éloignée de la position théorique à atteindre, on prévoit de faire évoluer progressivement la position du dispositif d'éclairage vers la position théorique, la vitesse de la progression étant paramétrable. Plusieurs cycles du diagramme fonctionnel peuvent donc être nécessaires pour atteindre la position théorique fournie par l'algorithme ALG1. On désigne par opération de lissage l'évolution progressive des dispositifs d'éclairage vers leur position théorique obtenue à l'aide d'un algorithme, qu'il s'agisse de l'algorithme ALG1 ou d'un algorithme ALG2 dont la fonction sera détaillée par la suite.

Si le taux de confiance est correct, c'est-à-dire supérieur au seuil prédéfini, alors l'angle de rotation théorique des projecteurs est calculé, à l'étape 60, par un algorithme ALG2 utilisant les informations de navigation. Parallèlement, l'algorithme ALG1 calcule systématiquement, dans une étape 70, la position théorique que devraient théoriquement adopter les dispositifs d'éclairage si les seules informations capteurs du véhicule devaient être prises en compte.

Le procédé se poursuit ensuite par une confrontation ou comparaison (étape 80) des résultats obtenus, d'une part, à l'issue de l'étape 70 et, d'autre part, à l'issue de l'étape 60. Cette étape permet de mesurer une éventuelle contradiction entre les résultats de ces deux étapes, qui mettent en oeuvre des algorithmes différents fonctionnant avec des paramètres différents.

Si la contradiction est faible (autrement dit, si la cohérence est bonne), alors on commande la rotation des projecteurs en fonction des calculs effectués au cours d'une étape 90. Dans cette étape, on procède de façon similaire à l'étape 50 en remplaçant l'algorithme ALG1 par l'algorithme ALG2, et en prenant comme paramètre non plus uniquement les informations capteurs du véhicule, mais aussi les informations de navigation. On procède également, comme dans l'étape 50, à une opération de lissage vers la position théorique obtenue au moyen de l'algorithme ALG2.

Si la contradiction est importante (autrement dit, si des incohérences ont été trouvées), alors on reprend le procédé au niveau de l'étape 50 du diagramme fonctionnel. La notion de contradiction s'appuie sur un historique et une ensemble de cas de figure identifiés. Par exemple, si la navigation décrit une route rectiligne entre le véhicule et le point E, et que l'angle au volant devient très différent de zéro, il est vraisemblable que le conducteur est sur une voie inexistante dans la cartographie. Par contre, les angles de rotation des phares issus de ALG1 et de ALG2 peuvent ici être très différent en valeur sans être contradictoires.

Une dernière étape 100 consiste en la transmission vers les dispositifs d'éclairage des commandes d'éclairage élaborées au cours des étapes 90 ou 50. Le cycle du procédé reprend alors au niveau de l'étape 10.

Comme cela a été dit précédemment, il est possible de prendre en compte les informations provenant d'un seul capteur embarqué, comme le capteur au volant, ou bien de plusieurs capteurs embarqués.

Sur la figure 3, on a représenté un projecteur de véhicule avec le système de commande de l'invention. Cette figure montre un projecteur 200 muni d'une optique 201 et d'une source de lumière 203 montée sur un support 202 mobile. Ce support 202 est actionné par un moteur 205 associé à un dispositif de rotation 204, tel qu'une rotule.

Le système de l'invention comporte aussi une unité de traitements des informations qui reçoit les informations provenant du capteur embarqué 207 et du système de navigation 208. Ce dispositif de traitement 206 met en oeuvre les étapes 20 à 100 du procédé de l'invention et envoie une information de commande au moteur 205. Ce dispositif de traitement peut être l'unité de contrôle d'éclairage, la navigation elle même ou toute unité de calcul ou de traitement électronique du véhicule.

Le capteur 207 peut être un capteur propre au véhicule, intérieur ou extérieur au système de navigation, comme le capteur de vitesse, le capteur d'accélération, le capteur d'angle au volant, le capteur de lacets ou encore le capteur d'effort. Le capteur 207 peut aussi recouvrir plusieurs capteurs. Ce peut être aussi un capteur de périmètre comme une caméra, un détecteur de brouillard ou un détecteur de ligne blanche. Parmi les capteurs, on peut également considérer les clignotants qui fournissent une information en temps réel sur le comportement du conducteur du véhicule.

Les capteurs dynamiques du véhicule fournissent généralement une information sûre, car mesurée en temps réel. Par contre, certains capteurs de périmètre, comme le détecteur de ligne blanche, fournissent une information qui ne peut être prise en compte, seule. En effet, dans le cas du détecteur de ligne blanche, le marquage au sol peut être totalement ou en partie effacé ou bien faussé par l'effet de la pluie sur la chaussée, ce qui peut rendre l'information erronée. Cette information peut toutefois être intéressante, dans certains cas, pour anticiper la trajectoire du véhicule, lorsqu'elle est associée à d'autres informations fournies par d'autres capteurs du véhicule. Cette information peut ainsi être fusionnée avec les informations des autres capteurs.

Dans une variante de l'invention, cette information issue du détecteur de ligne blanche peut se substituer à l'information du système de navigation, lorsque celui-ci a un taux de confiance trop faible.

Il est également possible d'utiliser, comme capteur, une caméra fixée sur le véhicule. Cette caméra fournit une profusion de pixels et, par conséquent, fournit une grande quantité d'informations. Ces informations peuvent aussi être testées pour savoir si elles sont pertinentes ou non. Dans ce cas, on peut calculer un indice de confiance de l'information fournie par la caméra et, en fonction de cet indice de confiance, tenir compte ou non de cette information.

Le système de navigation 208 comporte un GPS et une cartographie, qui sont classiquement associés pour permettre de fournir au conducteur des indications sur le parcours à suivre. Ce système de navigation diffuse donc des informations de position du véhicule, de description de la route empruntée et de description de carrefours ou des intersections via une liaison dédiée, par exemple une liaison série, ou un réseau de multiplexage, comme un réseau CAN.

Ce système de navigation associé aux capteurs embarqués du véhicule constitue un environnement suffisant pour permettre au calculateur d'éclairage, ou dispositif de traitement des informations, de mettre à profit les informations disponibles de la navigation et ainsi d'améliorer la fonction d'éclairage du véhicule. Il suffit, en pratique, que le calculateur d'éclairage puisse s'interfacer au système de navigation pour recevoir les informations citées précédemment.

Le procédé de l'invention qui vient d'être décrit peut être mis en oeuvre dans plusieurs applications afin de les rendre plus fiable. Une première application est celle qui a été décrite précédemment concernant l'orientation des projecteurs d'un véhicule.

Une autre application concerne l'éclairage de la route par un véhicule passant d'un pays où la conduite est à droite à un pays où la conduite est à gauche, ou inversement. Par exemple, lorsqu'un véhicule vient d'Angleterre et entre en France, la direction et/ou la forme du faisceau lumineux peut être modifiée automatiquement de façon à éclairer principalement le côté droit du véhicule comme cela est le cas pour un véhicule destiné à circuler en France. Dans ce cas, le système de navigation permet de savoir si le véhicule est en France ou en Angleterre et, par conséquent, la commande d'orientation de l'éclairage peut se faire automatiquement.

Une autre application encore concerne l'entrée ou la sortie d'un tunnel, d'un parc de stationnement ou de toutes zones sombres. Dans ce cas, si la navigation fournit une information pertinente, alors les projecteurs du véhicule peuvent être allumés avant que le véhicule n'entre dans la zone sombre. Dans ce cas, on ne commande plus l'orientation des faisceaux lumineux, mais leur mise en fonctionnement ou leur mise à l'arrêt.

Une autre application de l'invention est l'éclairage en ville (ou Town Lighting, en termes anglo-saxons). Dans cette application, si le système de navigation fournit une information pertinente, c'est-à-dire si le taux de confiance est élevé, alors on peut prévoir, lorsque le véhicule arrive à un croisement, d'aplatir et d'élargir le faisceau lumineux afin de permettre une meilleure visibilité, pour le conducteur, des trottoirs et autres côtés de la route. Dans cette application, la commande des projecteurs ne concerne pas seulement leur orientation, mais aussi la taille de leurs faisceaux.

Une autre application encore de l'invention concerne la conduite sur autoroute (ou Motorway, en termes anglo-saxons). Dans cette application, lorsque le système de navigation prévoit l'entrée du véhicule sur une autoroute, il adapte l'éclairage du véhicule à la conduite sur autoroute. L'invention peut ainsi s'adapter à toutes les fonctions nécessitant un mouvement d'un ou plusieurs éléments contenus dans un projecteur, qui sont notamment regroupées sous l'abréviation anglaise AFS pour Advanced Frontlighting Systems.

## Revendications

1. Procédé de commande de faisceaux lumineux émis par un dispositif d'éclairage d'un véhicule circulant sur une route, en fonction de la géométrie de cette route, comportant les étapes :
- Capture, par au moins un capteur du véhicule, d'au moins une information relative au comportement dynamique du véhicule (30) et détermination d'une première commande d'éclairage (ALG1) sur la base uniquement de ladite au moins une information relative au comportement dynamique du véhicule,
- Obtention d'un ensemble d'informations de navigation comprenant la forme de la route et un taux de confiance (20) pour lesdites informations de navigation, comparaison du taux de confiance à un seuil de confiance préalablement déterminé (40), et si le taux de confiance est supérieur au seuil de confiance, détermination d'une seconde commande d'éclairage (ALG2) prenant en compte au moins une partie de l'ensemble des informations de navigation, et
Si le taux de confiance est inférieur au seuil de confiance,
- Appliquer (50, 100) au dispositif d'éclairage ladite première commande d'éclairage,
**caractérisé en ce qu'**il comprend également les étapes :
Si le taux de confiance est supérieur au seuil de confiance,
- Comparer (80) lesdites première et seconde commandes d'éclairage,
- Appliquer (90, 100) au dispositif d'éclairage ladite seconde commande d'éclairage lorsqu'un écart entre lesdites première et seconde commandes d'éclairage est inférieur à un seuil prédéterminé, et
- Appliquer (50, 100) au dispositif d'éctairage ladite première commande d'éclairage lorsqu'un écart entre lesdites première et seconde commandes d'éclairage est supérieur à un seuil prédéterminé.

2. Procédé de commande selon la revendication 1, **caractérisé en ce qu'**il comporte une étape de capture de plusieurs informations relatives au comportement du véhicule.

3. Procédé de commande selon la revendication 1 ou 2, **caractérisé en ce qu'**il comporte une opération de lissage (50,90) des données de commande.

4. Procédé de commande selon l'une quelconque des revendications 1 à 3, **caractérisé en ce que** la commande du dispositif d'éclairage est une orientation des faisceaux lumineux.

5. Procédé de commande selon l'une quelconque des revendications 1 à 4, **caractérisé en ce que** la commande du dispositif d'éclairage est une sélection de la taille et/ou de la forme des faisceaux lumineux.

6. Procédé de commande selon l'une quelconque des revendications 1 à 5, **caractérisé en ce que** la commande du dispositif d'éclairage est une mise en fonctionnement ou une mise à l'arrêt des faisceaux lumineux.

7. Système de commande des faisceaux lumineux émis par un dispositif d'éclairage (200) d'un véhicule (2) circulant sur une route (1), en fonction de la géométrie de cette route, comportant au moins un capteur (207) lié au véhicule et donnant une information relative au comportement du véhicule, **caractérisé en ce qu'**il comporte :
- un système de navigation embarqué (208),
- un dispositif (206) de traitement des informations fournies par le capteur et par le système de navigation, ledit dispositif de traitement (206) comprenant des moyens adaptés à une mise en oeuvre du procédé selon l'une quelconque des revendications 1 à 6, et
- un dispositif de commande de l'éclairage (205,206),

8. Système de commande selon la revendication 7, **caractérisé en ce que** le système de navigation comporte au moins une cartographie et un GPS.

9. Système de commande selon la revendication 7 ou 8, **caractérisé en ce que** le capteur est un capteur de véhicule.

10. Système de commande selon l'une quelconque des revendications 7 à 9, **caractérisé en ce que** le capteur est un capteur de périmètre.

11. Système de commande selon l'une quelconque des revendications 7 à 10, **caractérisé en ce qu'**il comporte plusieurs capteurs de véhicule et/ou de périmètre.

12. Système de commande selon la revendication 9, **caractérisé en ce que** le capteur de véhicule est un capteur d'angle au volant, ou un capteur de vitesse du véhicule ou un capteur de lacet ou un capteur d'effort radial.

13. Système de commande selon la revendication 10, **caractérisé en ce que** le capteur de périmètre est une caméra ou un détecteur de lignes blanches ou un détecteur de brouillard.

14. Dispositif d'éclairage automobile utilisant le système de commande revendiqué dans l'une au moins des revendications 7 à 13.

15. Véhicule automobile équipé d'au moins un dispositif d'éclairage selon la revendication 14.

## Patentansprüche

1. Verfahren zum Steuern von Lichtbündeln, die von einer Beleuchtungsvorrichtung eines Fahrzeugs, das eine Straße befährt, in Abhängigkeit von der Geometrie dieser Straße ausgesandt werden, mit den Schritten:
- Erfassen wenigstens einer Information über das dynamische Verhalten des Fahrzeugs (30) durch wenigstens einen Sensor des Fahrzeugs und Bestimmen eines ersten Beleuchtungsbefehls (ALG1) ausschließlich auf der Basis der wenigstens einen Information über das dynamische Verhalten des Fahrzeugs,
- Erlangen einer Gesamtheit von Navigationsinformationen, die die Straßenform und einen Zuverlässigkeitsfaktor (20) für die Navigationsinformationen beinhaltet, Vergleichen des Zuverlässigkeitsfaktors mit einer vorab bestimmten Zuverlässigkeitsschwelle (40) und, falls der Zuverlässigkeitsfaktor über der Zuverlässigkeitsschwelle liegt, Bestimmen eines zweiten Beleuchtungsbefehls (ALG2) unter Berücksichtigung wenigstens eines Teils der Gesamtheit von Navigationsinformationen, und,
falls der Zuverlässigkeitsfaktor unter der Zuverlässigkeitsschwelle liegt,
- Anwenden (50, 100) des ersten Beleuchtungsbefehls auf die Beleuchtungsvorrichtung,
**dadurch gekennzeichnet, dass** es ferner die folgenden Schritte umfasst:
falls der Zuverlässigkeitsfaktor über der Zuverlässigkeitsschwelle liegt,
- Vergleichen (80) des ersten und des zweiten Beleuchtungsbefehls,
- Anwenden (90, 100) des zweiten Beleuchtungsbefehls auf die Beleuchtungsvorrichtung, wenn der Unterschied zwischen dem ersten und dem zweiten Beleuchtungsbefehl kleiner ist als ein vorbestimmter Schwellenwert,
und
- Anwenden (50, 100) des ersten Beleuchtungsbefehls auf die Beleuchtungsvorrichtung, wenn der Unterschied zwischen dem ersten und dem zweiten Beleuchtungsbefehl größer ist als ein vorbestimmter Schwellenwert.

2. Steuerungsverfahren nach Anspruch 1,
**dadurch gekennzeichnet, dass** es einen Schritt zum Erfassen mehrerer Informationen über das Fahrzeugverhalten umfasst.

3. Steuerungsverfahren nach Anspruch 1 oder 2,
**dadurch gekennzeichnet, dass** es eine Operation zum Glätten (50, 90) der Steuerdaten umfasst.

4. Steuerungsverfahren nach einem der Ansprüche 1 bis 3,
**dadurch gekennzeichnet, dass** die Steuerung der Beleuchtungsvorrichtung eine Ausrichtung der Lichtbündel ist.

5. Steuerungsverfahren nach einem der Ansprüche 1 bis 4,
**dadurch gekennzeichnet, dass** die Steuerung der Beleuchtungsvorrichtung eine Auswahl der Größe und/oder der Form der Lichtbündel ist.

6. Steuerungsverfahren nach einem der Ansprüche 1 bis 5,
**dadurch gekennzeichnet, dass** die Steuerung der Beleuchtungsvorrichtung ein Einschalten oder Ausschalten der Lichtbündel ist.

7. System zum Steuern der Lichtbündel, die von einer Beleuchtungsvorrichtung (200) eines Fahrzeugs (2), das eine Straße (1) befährt, in Abhängigkeit von der Geometrie dieser Straße ausgesandt werden, das wenigstens einen Sensor (207) umfasst, der mit dem Fahrzeug verbunden ist und eine Information über das Fahrzeugverhalten liefert,
**dadurch gekennzeichnet, dass** es umfasst:
- ein eingebautes Navigationssystem (208),
- eine Vorrichtung (206) zur Verarbeitung der von dem Sensor und dem Navigationssystem gelieferten Informationen, wobei die Verarbeitungsvorrichtung (206) Mittel umfasst, die zur Durchführung des Verfahrens nach einem der Ansprüche 1 bis 6 geeignet sind, und
- eine Vorrichtung zum Steuern der Beleuchtung (205, 206).

8. Steuerungssystem nach Anspruch 7,
**dadurch gekennzeichnet, dass** das Navigationssystem wenigstens eine Karte und ein GPS umfasst.

9. Steuerungssystem nach Anspruch 7 oder 8,
**dadurch gekennzeichnet, dass** der Sensor ein Fahrzeugsensor ist.

10. Steuerungssystem nach einem der Ansprüche 7 bis 9,
**dadurch gekennzeichnet, dass** der Sensor ein Umfeldsensor ist.

11. Steuerungssystem nach einem der Ansprüche 7 bis 10,
**dadurch gekennzeichnet, dass** es mehrere Fahrzeugsensoren und/oder Umfeldsensoren umfasst.

12. Steuerungssystem nach Anspruch 9,
**dadurch gekennzeichnet, dass** der Fahrzeugsensor ein Lenkwinkelsensor oder ein Fahrzeuggeschwindigkeitssensor oder ein Gierratensensor oder ein Radialkraftsensor ist.

13. Steuerungssystem nach Anspruch 10,
**dadurch gekennzeichnet, dass** der Umfeldsensor eine Kamera oder eine Fahrspurerkennung oder ein Nebelsensor ist.

14. Fahrzeugbeleuchtungsvorrichtung unter Verwendung des Steuerungssystems nach wenigstens einem der Ansprüche 7 bis 13.

15. Kraftfahrzeug, ausgerüstet mit wenigstens einer Beleuchtungsvorrichtung nach Anspruch 14.

## Claims

1. Method of controlling light beams emitted by a lighting device on a vehicle travelling on a road, according to the geometry of this road, comprising the steps of:
- capturing, by at least one sensor on the vehicle, at least one item of information relating to the dynamic behaviour of the vehicle (30) and determining a first lighting command (ALG1) on the basis solely of the said at least one item of information relating to the dynamic behaviour of the vehicle,
- obtaining a set of navigation information comprising the shape of the road and a confidence level (20) for the said navigation information, comparing the confidence rate with a previously determined confidence threshold (40) and, if the confidence level is higher than the confidence threshold, determining a second lighting command (ALG2) taking into account at least part of the set of navigation information, and
if the confidence level is lower than the confidence threshold,
- applying (50, 100) the said first lighting command to the lighting device,
**characterised in that** it also comprises the steps of:
if the confidence level is higher than the confidence threshold,
- comparing (80) the said first and second lighting commands,
- applying (90, 100) the said second lighting command to the lighting device when a difference between the said first and second lighting commands is lower than a predetermined threshold, and
- applying (50, 100) the said first lighting command to the lighting device when a difference between the said first and second lighting commands is higher than a predetermined threshold.

2. Control method according to claim 1, **characterised in that** it comprises a step of capturing several items of information relating to the behaviour of the vehicle.

3. Control method according to claim 1 or 2, **characterised in that** it comprises an operation (50, 90) of smoothing the control data.

4. Control method according to any one of claims 1 to 3, **characterised in that** the control of the lighting device is an orientation of the light beams.

5. Control method according to any one of claims 1 to 4, **characterised in that** the control of the lighting device is a selection of the size and/or shape of the light beams.

6. Control method according to any one of claims 1 to 5, **characterised in that** the control of the lighting device is a switching on or off of the light beams.

7. System for controlling light beams emitted by a lighting device (20) on a vehicle (2) travelling on a road (1), according to the geometry of this road, comprising at least one sensor (207), connected to the vehicle and giving information relating to the behaviour of the vehicle, **characterised in that** it comprises:
- an onboard navigation system (208),
- a device (206) for processing information supplied by the sensor and by the navigation system, the said processing device (206) comprising means adapted to an implementation of the method according to any one of claims 1 to 6, and
- a device for controlling the lighting (205), (206).

8. Control system according to claim 7, **characterised in that** the navigation system comprises at least one cartography and a GPS.

9. Control system according to claim 7 or 8, **characterised in that** the sensor is a vehicle sensor.

10. Control system according to any one of claims 7 to 9, **characterised in that** the sensor is a perimeter sensor.

11. Control system according to any one of claims 7 to 10, **characterised in that** it comprises several vehicle and/or perimeter sensors.

12. Control system according to claim 9, **characterised in that** the vehicle sensor is a steering-wheel angle sensor or a vehicle speed sensor or a yaw sensor or a radial force sensor.

13. Control system according to claim 10, **characterised in that** the perimeter sensor is a camera or a white-line detector or a fog detector.

14. Automobile lighting device using the control system claimed in at least one of claims 7 to 13.

15. Motor vehicle equipped with at least one lighting device according to claim 14.
